# EUROPÄISCHE PATENTANMELDUNG

(11) **EP 4 755 581 A1**
(43) Veröffentlichungstag der Anmeldung: **10.06.2026**
(21) Anmeldenummer: 25217270.5
(22) Anmeldetag: 20.11.2025
(51) Int. Cl.: B24B 55/05, B24B 27/08, B24D 5/06, B24B 27/06

(54) **HANDGEFÜHRTES ARBEITSGERÄT UND VERFAHREN ZU DESSEN BETRIEB**

(30) Priorität: 09.12.2024 DE 102024136685
(71) Anmelder: Andreas Stihl AG & Co. KG, 71336 Waiblingen (DE)
(72) Erfinder: Vogt, Tim, 73525 Schwäbisch Gmünd (DE); Berger, Alexander, 71384 Weinstadt (DE); Johannes, Alber, 70190 Stuttgart (DE); Christopher, Tost, 71549 Auenwald (DE)
(74) Vertreter: Reinhardt, Annette

(57) **Zusammenfassung**

Ein Arbeitsgerät umfasst einen Antriebsmotor (3), eine von dem Antriebsmotor (3) angetriebene Trennscheibe (9), eine Schutzhaube (11), die die Trennscheibe (9) über einen Abschnitt ihres Umfangs (10) abdeckt und die vom Bediener in einer Öffnungsrichtung (31) und einer entgegengerichteten Schließrichtung (32) verstellbar ist, eine Erfassungseinrichtung (19) zur Erfassung der Position der Schutzhaube (11) und eine Steuereinrichtung (20). Die Steuereinrichtung (20) ist dazu ausgebildet, das Arbeitsgerät (1) in einem ersten Betriebsmodus (21) und in einem zweiten Betriebsmodus (22) zu betreiben und in Abhängigkeit der von der Erfassungseinrichtung (19) erfassten Position der Schutzhaube (11) bei einer Verstellung in Öffnungsrichtung (31) vom ersten Betriebsmodus (21) in den zweiten Betriebsmodus (22) umzuschalten und bei einer Verstellung der Schutzhaube (11) in Schließrichtung (32) vom zweiten Betriebsmodus (22) in den ersten Betriebsmodus (21) umzuschalten. Die Umschaltung vom ersten Betriebsmodus (21) in den zweiten Betriebsmodus (22) erfolgt bei einer ersten Position (44) der Schutzhaube (11). Die Umschaltung vom zweiten Betriebsmodus (22) in den ersten Betriebsmodus (21) erfolgt bei einer zweiten Position (45) der Schutzhaube (11). Die zweite Position (45) der Schutzhaube (11) wird bei einer Verstellung der Schutzhaube (11) in Schließrichtung (32) nach der ersten Position (44) erreicht. Ein Verfahren zum Betrieb eines Arbeitsgeräts (1) sieht vor, zwischen den Betriebsmodi (21, 22) abhängig von der Verstellrichtung der Schutzhaube (11) bei unterschiedlichen Positionen (44, 45) der Schutzhaube (11) umzuschalten.

## Beschreibung

Die Erfindung betrifft ein handgeführtes Arbeitsgerät der im Oberbegriff des Anspruchs 1 angegebenen Gattung und ein Verfahren zum Betrieb eines handgeführten Arbeitsgeräts.

Aus der DE 10 2017 008 391 A1 ist ein Trennschleifer bekannt, an dessen Schutzhaube eine Erfassungseinrichtung vorgesehen ist. Die Erfassungseinrichtung ist durch einen Stift gebildet, der am Ausleger geführt ist und der an der Schutzhaube abgleitet, wenn die Schutzhaube verstellt wird. Der Stift wirkt auf einen elektrischen Schalter. Die Ansteuerung des Trennschleifers erfolgt in Abhängigkeit davon, ob der elektrische Schalter geöffnet oder geschlossen ist.

Der Erfindung liegt die Aufgabe zugrunde, ein Arbeitsgerät der gattungsgemäßen Art zu schaffen, das ein gutes Betriebsverhalten aufweist. Eine weitere Aufgabe der Erfindung besteht darin, ein Verfahren zum Betrieb eines Arbeitsgeräts anzugeben, mit dem sich ein gutes Betriebsverhalten erreichen lässt.

Diese Aufgabe wird bezüglich des Arbeitsgeräts durch ein Arbeitsgerät mit den Merkmalen des Anspruchs 1 gelöst. Bezüglich des Verfahrens wird die Aufgabe durch ein Verfahren mit den Merkmalen des Anspruchs 10 gelöst.

Bei bekannten Arbeitsgeräten wie beispielsweise Trennschleifern wird an einer definierten Position der Schutzhaube zwischen einem ersten Betriebsmodus und einem zweiten Betriebsmodus umgeschaltet. Wird die Schutzhaube vom Bediener in diese definierte Position gestellt, so kann sich aufgrund der im Betrieb entstehenden Vibrationen eine häufige Betätigung des Schalters und dadurch ein Hin- und Herwechseln zwischen den Betriebsmodi ergeben. Um dies zu vermeiden, ist nun vorgesehen, bei unterschiedlichen Positionen der Schutzhaube zwischen den Betriebsmodi umzuschalten, und zwar in Abhängigkeit davon, ob die Schutzhaube in Öffnungsrichtung oder in Schließrichtung verstellt wird. Dadurch kann ein häufiges Umschalten zwischen den Betriebsmodi, das beispielsweise durch Vibrationen hervorgerufen wird, auf einfache Weise vermieden werden. Die Umschaltung vom ersten Betriebsmodus in den zweiten Betriebsmodus erfolgt bei einer ersten Position der Schutzhaube. Die Umschaltung vom zweiten Betriebsmodus in den ersten Betriebsmodus erfolgt bei einer zweiten Position der Schutzhaube. Die zweite Position der Schutzhaube wird bei einer Verstellung der Schutzhaube in Schließrichtung nach der ersten Position erreicht. Die genannten Positionen der Schutzhaube können sich beispielsweise aufgrund von Verschmutzungen oder Verschließ über die Lebensdauer des Arbeitsgeräts ändern. Für die Vermeidung eines schnellen Wechsels der Betriebsmodi muss lediglich sichergestellt sein, dass die erste Position und die zweite Position nicht identisch sind. Die erste Position der Schutzhaube und die zweite Position der Schutzhaube entsprechen insbesondere Winkellagen der Schutzhaube um eine Drehachse, um die die Schutzhaube verschwenkbar ist.

Dass die Umschaltung zwischen den Betriebsmodi bei einer ersten bzw. zweiten Position der Schutzhaube erfolgt, bedeutet, dass zwischen den Betriebsmodi umgeschaltet wird, wenn die erste bzw. die zweite Position der Schutzhaube bei der Verstellung der Schutzhaube überschritten wird.

Die erste Position der Schutzhaube und die zweite Position der Schutzhaube sind insbesondere um mindestens 1°, insbesondere um mindestens 2° um die Drehachse der Trennscheibe zueinander beabstandet. Dies bedeutet, dass die Schutzhaube beim Verstellen in Schließrichtung um mindestens 1° über die erste Position hinaus verstellt werden muss, damit die Steuereinrichtung das Arbeitsgerät zurück in den ersten Betriebsmodus stellt. Der Abstand der Positionen ist insbesondere größer als Relativbewegungen, die sich im Betrieb zwischen den Elementen, an denen die Einheiten der Erfassungseinrichtung angeordnet sind, beispielsweise aufgrund von Vibrationen, ergeben. Die Elemente, an denen die Einheiten der Erfassungseinrichtung angeordnet sind, können beispielsweise die Schutzhaube und, wenn das Arbeitsgerät ein Trennschleifer ist, ein Ausleger des Trennschleifers sein.

Die Steuereinrichtung ist insbesondere dazu ausgebildet, im zweiten Betriebsmodus eine Drehzahlbegrenzungseinrichtung zu aktivieren. Die Drehzahlbegrenzungseinrichtung ist insbesondere im ersten Betriebsmodus deaktiviert. Die Deaktivierung der Drehzahlbegrenzungseinrichtung im ersten Betriebsmodus erfolgt insbesondere durch die Steuereinrichtung.

Die Drehzahlbegrenzungseinrichtung ist insbesondere eine Einrichtung, die die maximale Drehzahl des Arbeitsgeräts begrenzt. Unterhalb der maximalen Drehzahl arbeitet das Arbeitsgerät im ersten Betriebsmodus und im zweiten Betriebsmodus insbesondere gleich.

Insbesondere beträgt die maximale Drehzahl des Arbeitsgeräts im zweiten Betriebsmodus 60 % bis 70 % der maximalen Drehzahl des Arbeitsgeräts im ersten Betriebsmodus.

Alternativ oder zusätzlich ist insbesondere vorgesehen, dass die Steuereinrichtung dazu ausgebildet ist, im zweiten Betriebsmodus eine Bremseinrichtung des Arbeitsgeräts zu aktivieren. Insbesondere ist die Steuereinrichtung dazu ausgebildet, die Bremseinrichtung im ersten Betriebsmodus zu deaktivieren. Die Bremseinrichtung kann insbesondere dann, wenn der Antriebsmotor ein Elektromotor ist, als Motorbremse ausgebildet sein.

Ein einfacher Aufbau des Arbeitsgeräts ergibt sich, wenn die Erfassungseinrichtung mindestens einen Magnet und mindestens einen Sensor, insbesondere einen Hallsensor, zur Erfassung der Magnetfeldstärke des mindestens einen Magnets aufweist. Dadurch ergibt sich ein einfacher und robuster Aufbau. Alternativ kann die Erfassungseinrichtung auch einen anderen Sensor aufweisen. Insbesondere ist der Sensor ein Sensor, der ein elektrisches Sensorsignal liefert.

Insbesondere befindet sich der Magnet im ersten Betriebsmodus im Bereich des mindestens einen Sensors. Bei einer Position der Schutzhaube, die dem zweiten Betriebsmodus zugeordnet ist, befindet sich der Magnet insbesondere nicht im Bereich des Sensors und kann von dem Sensor nicht erfasst werden.

Der Magnet ist insbesondere durch Klemmen, Kleben oder Eingießen an der Schutzhaube fixiert.

Insbesondere erstreckt sich der Magnet über einen Erstreckungswinkel von mindestens 35° um die Drehachse der Trennscheibe.

Die Umschaltung vom ersten in den zweiten Betriebsmodus erfolgt insbesondere, wenn der Messwert des mindestens einen Sensors einen ersten Schwellwert erreicht. Die Umschaltung vom zweiten Betriebsmodus in den ersten Betriebsmodus erfolgt insbesondere, wenn der Messwert der Erfassungseinrichtung einen zweiten Schwellwert erreicht. Der zweite Schwellwert des Messwerts ist dabei der zweiten Position der Schutzhaube zugeordnet und der erste Schwellwert ist der ersten Position der Schutzhaube zugeordnet.

Die Differenz zwischen dem ersten Schwellwert und dem zweiten Schwellwert beträgt insbesondere mindestens 5 %, insbesondere mindestens 10 % der Differenz zwischen dem maximalen Messwert und dem minimalen Messwert der Erfassungseinrichtung, die sich bei der Verstellung der Schutzhaube zwischen ihren Endlagen ergeben.

Das Arbeitsgerät ist insbesondere ein Trennschleifer. Der Trennschleifer weist insbesondere einen Ausleger auf, an dem die Trennscheibe drehbar gelagert ist. Ein einfacher Aufbau ergibt sich, wenn der mindestens eine Sensor an dem Ausleger angeordnet ist und der mindestens eine Magnet an der Schutzhaube angeordnet ist.

Ein vorteilhafter Aufbau wird insbesondere erreicht, wenn der mindestens eine Magnet so orientiert ist, dass eine gedachte Ebene, die senkrecht zur Drehachse der Trennscheibe verläuft, den Magnet durch Nordpol und Südpol schneidet. Die Ebene des Magnets, die zwischen Nordpol und Südpol verläuft, ist insbesondere parallel zur Drehachse der Trennscheibe orientiert.

Der mindestens eine Sensor ist insbesondere auf einer Platine fixiert, die um weniger als 45° zur Drehachse der Trennscheibe geneigt ist. Insbesondere verläuft die Platine parallel zur Drehachse der Trennscheibe. Es hat sich gezeigt, dass auch bei einer Orientierung von Magnet und Platine in der genannten Weise ausreichend starke Messsignale in dem Sensor generiert werden können. Aufgrund der Anordnung der Platine geneigt, insbesondere parallel zur Drehachse der Trennscheibe, ergibt sich eine platzsparende Anordnung des Sensors. Dadurch wird ein kleinbauender, kompakter Aufbau des Auslegers ermöglicht.

Bei einer Bewegung der Schutzhaube in Öffnungsrichtung wird insbesondere der in üblicher Arbeitshaltung des Arbeitsgeräts oben liegende Umfangsbereich der Trennscheibe, der nicht von der Schutzhaube abgedeckt ist, vergrößert. Insbesondere ist das Arbeitsgerät ein Trennschleifer. Der in üblicher Arbeitshaltung oben liegende Bereich der Trennscheibe entspricht insbesondere einem in einer Abstellposition des Trennschleifers auf einer ebenen, horizontalen Abstellfläche oben angeordneten Bereich. Der Trennschleifer weist insbesondere mindestens einen Handgriff auf, der zum Führen des Trennschleifers im Betrieb vorgesehen ist. Insbesondere ist ein Handgriff ein hinterer Handgriff. Insbesondere ist ein Handgriff ein Bügelgriff.

Die Schließrichtung verläuft insbesondere in Drehrichtung der Trennscheibe. Die Öffnungsrichtung verläuft insbesondere entgegengesetzt zur Drehrichtung der Trennscheibe.

Die Trennscheibe ist insbesondere an einem Ausleger des als Trennschleifer ausgebildeten Arbeitsgeräts drehbar gelagert. Der Ausleger weist eine Längsmittelachse auf. Die Längsmittelachse verläuft in Längsrichtung des Auslegers und schneidet die Drehachse der Trennscheibe.

Bei Blickrichtung in Richtung der Drehachse der Trennscheibe vergrößert sich bei einer Verstellung der Schutzhaube in Öffnungsrichtung insbesondere der nicht von der Schutzhaube abgedeckte Abschnitt des Umfangs der Trennscheibe, der auf der gleichen Seite der Längsmittelachse angeordnet ist wie der mindestens eine Handgriff. Bei einer Verstellung der Schutzhaube in Schließrichtung verkleinert sich insbesondere der nicht von der Schutzhaube abgedeckte Abschnitt des Umfangs der Trennscheibe, der bei Blickrichtung in Richtung der Drehachse der Trennscheibe auf der gleichen Seite der Längsmittelachse angeordnet ist wie der mindestens eine Handgriff.

Für ein Verfahren zum Betrieb eines Arbeitsgeräts mit einem Antriebsmotor und mit einer von dem Antriebsmotor angetriebenen Trennscheibe, mit einer Schutzhaube, die die Trennscheibe über einen Abschnitt ihres Umfangs abdeckt und die vom Bediener in einer Öffnungsrichtung und einer entgegengerichteten Schließrichtung verstellbar ist, mit einer Erfassungseinrichtung zur Erfassung der Position der Schutzhaube und mit einer Steuereinrichtung, wobei die Steuereinrichtung das Arbeitsgerät in einem ersten Betriebsmodus und in einem zweiten Betriebsmodus betreibt, und in Abhängigkeit der von der Erfassungseinrichtung gemessenen Position der Schutzhaube bei einer Verstellung in Öffnungsrichtung vom ersten Betriebsmodus in den zweiten Betriebsmodus umschaltet und bei einer Verstellung der Schutzhaube in Schließrichtung vom zweiten Betriebsmodus in den ersten Betriebsmodus umschaltet, wobei die Steuereinrichtung bei einer ersten Position der Schutzhaube vom ersten Betriebsmodus in den zweiten Betriebsmodus umschaltet, ist vorgesehen, dass die Steuereinrichtung bei einer zweiten Position der Schutzhaube vom zweiten Betriebsmodus in den ersten Betriebsmodus umschaltet, wobei die zweite Position der Schutzhaube bei einer Verstellung in Schließrichtung nach der ersten Position erreicht wird.

Insbesondere bestimmt die Steuereinrichtung bei Inbetriebnahme des Arbeitsgeräts, ob die Position der Schutzhaube dem ersten Betriebsmodus oder dem zweiten Betriebsmodus zugeordnet ist, und stellt den entsprechenden Betriebsmodus ein. Auch wenn die Schutzhaube in ausgeschaltetem Zustand des Arbeitsgeräts verdreht wird, startet das Arbeitsgerät dadurch in dem Betriebsmodus, der dieser Position der Schutzhaube zugeordnet ist. Dabei ist insbesondere in der Steuereinrichtung hinterlegt, ob bei einer Position der Schutzhaube zwischen der ersten und der zweiten Position der erste oder der zweite Betriebsmodus einzustellen ist.

Ausführungsbeispiele der Erfindung werden im Folgenden anhand der Zeichnung erläutert. Es zeigen:
- Fig. 1: eine Seitenansicht eines Ausführungsbeispiels eines Arbeitsgeräts mit der Schutzhaube in einer ersten Endlage, in der die Schutzhaube geschlossen ist,
- Fig. 2: einen Teil des Auslegers, der Trennscheibe und der Schutzhaube des Arbeitsgeräts in Fig. 1 in einer zweiten Endlage der Schutzhaube, in der die Schutzhaube weit geöffnet ist,
- Fig. 3: das Arbeitsgerät aus Fig. 1 mit teilweise geöffneter Schutzhaube,
- Fig. 3a: eine ausschnittsweise Schnittdarstellung von Fig. 3 im Bereich eines Auslegers des Arbeitsgeräts, in der der ungefähre Verlauf der Schnitte eingezeichnet ist,
- Fig. 4: eine ausschnittsweise Schnittdarstellung durch den Ausleger und die Schutzhaube des Arbeitsgeräts aus Fig. 3 entlang der Linie III-III in Fig. 3a,
- Fig. 5: eine Seitenansicht des Arbeitsgeräts mit der Schutzhaube in der zweiten Endlage,
- Fig. 6: eine ausschnittsweise Schnittdarstellung durch den Ausleger aus Fig. 5 in einer Darstellung entsprechend Fig. 4,
- Fig. 7: eine ausschnittsweise perspektivische Darstellung des Grundkörpers des Auslegers im Bereich des Sensormoduls,
- Fig. 8: eine ausschnittsweise Schnittdarstellung entlang der Linie VIII-VIII in Fig. 3a,
- Fig. 9: ein Diagramm, das den Zusammenhang zwischen dem Messwert des Sensors und dem Öffnungswinkel der Schutzhaube angibt,
- Fig. 10: eine vergrößerte ausschnittsweise Darstellung eines Bereichs des Diagramms aus Fig. 9,
- Fig. 11: eine schematische Darstellung der Umschaltung zwischen den Betriebsmodi in Abhängigkeit der Position und Verstellrichtung der Schutzhaube,
- Fig. 12: eine schematische Darstellung des Ablaufs des Verfahrens zum Betrieb des Arbeitsgeräts.

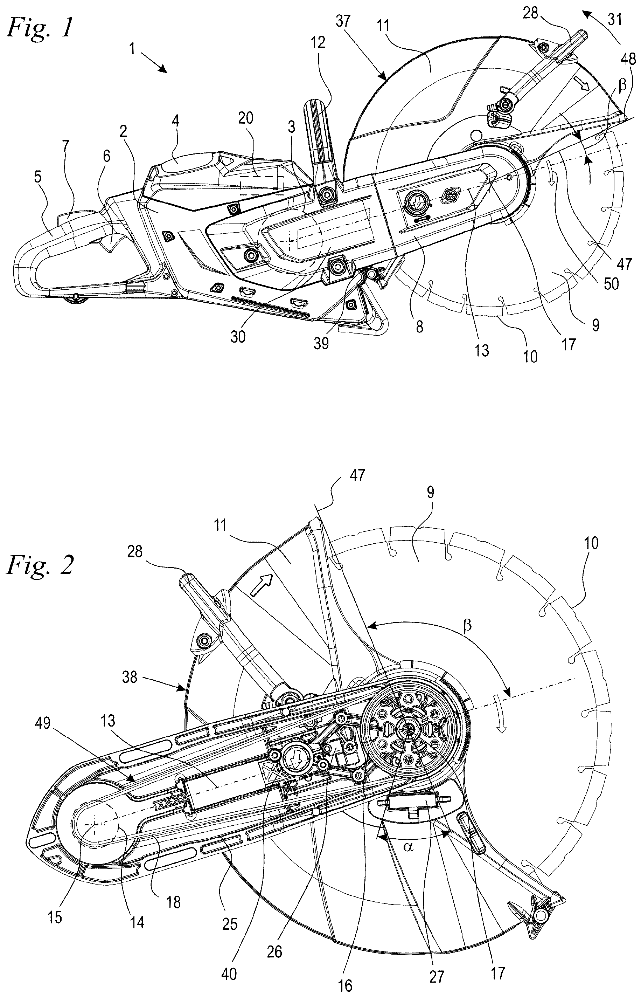

Fig. 1 zeigt in Seitenansicht ein Arbeitsgerät 1. Im Ausführungsbeispiel ist das Arbeitsgerät 1 ein Trennschleifer. Das Arbeitsgerät 1 kann auch ein anderes Arbeitsgerät, beispielsweise ein Winkelschleifer, sein. Das Arbeitsgerät 1 umfasst ein Gehäuse 2, in dem ein Antriebsmotor 3 angeordnet ist. Im Ausführungsbeispiel ist der Antriebsmotor 3 ein elektrischer Antriebsmotor. Zur Energieversorgung des Antriebsmotors 3 ist ein Akku 4 vorgesehen, der im Gehäuse 2 gehalten ist. Der Antriebsmotor 3 kann auch ein verbrennungsmotorisch angetriebener Antriebsmotor 3, insbesondere ein gemischgeschmierter Verbrennungsmotor wie ein Zweitaktmotor oder ein gemischgeschmierter Viertaktmotor sein.

Zum Führen des Arbeitsgeräts 1 im Betrieb sind im Ausführungsbeispiel zwei Handgriffe 5 und 12 vorgesehen. Der Handgriff 5 ist als hinterer Handgriff ausgebildet. Am Handgriff 5 sind ein Bedienhebel 6 und eine Bedienhebelsperre 7 angeordnet. Der Handgriff 12 ist als Griffbügel ausgebildet. Der Handgriff 12 übergreift das Gehäuse 2 an der dem hinteren Handgriff 5 entfernt liegenden Seite des Gehäuses 2 benachbart zu einer Schutzhaube 11.

Am Gehäuse 2 ist ein Ausleger 8 angeordnet. Am Ausleger 8 ist eine Trennscheibe 9 drehbar gelagert. Die Trennscheibe 9 ist von dem Antriebsmotor 3 rotierend angetrieben. Die Trennscheibe 9 ist im Betrieb in einer Drehrichtung 50 angetrieben. Die Trennscheibe 9 weist einen Umfang 10 auf. Ein Teil des Umfangs 10 der Trennscheibe 9 ist von der Schutzhaube 11 abgedeckt. Die Schutzhaube 11 ist am Ausleger 8 verschwenkbar gelagert. Die Schutzhaube 11 weist einen Griff 28 auf, an dem ein Bediener die Schutzhaube 11 greifen kann, um die Schutzhaube 11 zu verstellen. Die Schutzhaube 11 ist um eine Drehachse, die im Ausführungsbeispiel einer Drehachse 17 der Trennscheibe 9 entspricht, verschwenkbar.

Der Griff 28 kann mit integrierter Wasserversorgung ausgebildet sein.

In Fig. 1 ist die Schutzhaube 11 in einer ersten Endlage 37 dargestellt, die einer vollständig geschlossenen Position der Schutzhaube 11 entspricht. Im Ausführungsbeispiel ist die erste Endlage 37 durch einen an der Schutzhaube 11 ausgebildeten Anschlag 39 definiert. Der Anschlag 39 wirkt mit dem Ausleger 8 zusammen. Auch andere Festlegungen der ersten Endlage 37 der Schutzhaube 11 können vorteilhaft sein.

Der Ausleger 8 weist eine Längsmittelachse 13 auf. Die Längsmittelachse 13 verläuft in Längsrichtung des Auslegers 8 und schneidet die Drehachse 17 der Trennscheibe 9.

Die Position der Schutzhaube 11 wird vorliegend als Öffnungswinkel β angegeben. Der Öffnungswinkel β ist zwischen der Längsmittelachse 13 und einer an einer Kante 48 der Schutzhaube 11 anliegenden Linie 47, die mit der Position der Schutzhaube 11 korreliert, eingezeichnet. Die Linie 47 teilt den bezogen auf die Drehachse 17 radial nach außen von der Schutzhaube 11 abgedeckten Abschnitt des Umfangs 10 der Trennscheibe 9 und den nicht von der Schutzhaube 11 abgedeckten Abschnitt des Umfangs 10 der Trennscheibe 9.

In der in Fig. 1 dargestellten ersten Endlage 37 der Schutzhaube 11 schließt die Linie 47 mit der Längsmittelachse 13 einen Öffnungswinkel β ein, der vergleichsweise klein ist. Insbesondere ist der Öffnungswinkel β kleiner als 20°, insbesondere kleiner als 10°. Bei der in Fig. 1 dargestellten Seitenansicht in Blickrichtung parallel zur Drehachse 17 liegen die Handgriffe 5 und 12 oberhalb der Längsmittelachse 13. Der Abschnitt des Umfangs 10 der Trennscheibe 9, der nicht von der Schutzhaube 11 abgedeckt ist und der auf der gleichen Seite der Längsmittelachse 13 liegt wie die Handgriffe 5 und 12, ist vergleichsweise klein und erstreckt sich über den Öffnungswinkel β. In der Darstellung in Fig. 1 liegt der oberhalb der Längsmittelachse 13 liegende Abschnitt des Umfangs 10 auf der gleichen Seite der Längsmittelachse 13 wie die Handgriffe 5 und 12.

Das Arbeitsgerät 1 weist eine Steuereinrichtung 20 auf. Die Steuereinrichtung 20 steuert den Antriebsmotor 3 an.

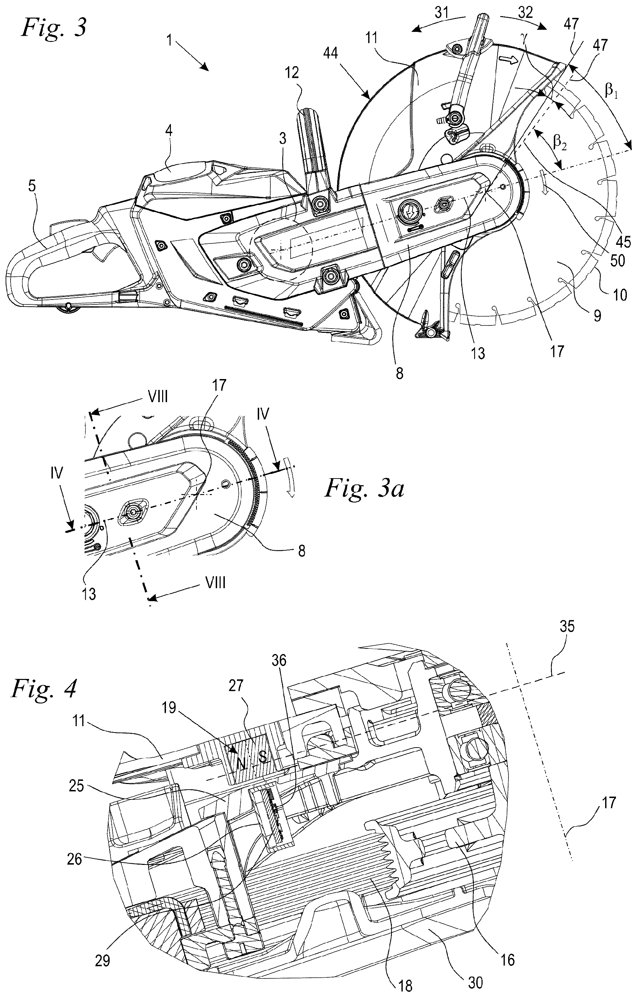

Zur Ermittlung der Position der Schutzhaube 11 weist das Arbeitsgerät 1 eine Erfassungseinrichtung 19 (Fig. 4) auf. Die Erfassungseinrichtung 19 umfasst einen Magnet 27 sowie ein Sensormodul 26, die im Folgenden noch näher erläutert werden.

In Fig. 2 ist der Ausleger 8 ohne seinen Deckel 30 dargestellt. Der Ausleger 8 weist einen Grundkörper 25 auf. Der Deckel 30 kann mehrteilig ausgebildet sein. Auch eine mehrteilige Ausbildung des Grundkörpers 25 kann vorgesehen sein.

Im Ausführungsbeispiel wird die Trennscheibe 9 vom Antriebsmotor 3 über einen Riementrieb 49 angetrieben. Der Riementrieb 49 umfasst einen Antriebsriemen 18, der um eine vom Antriebsmotor 3 angetriebene erste Riemenscheibe 14 und eine mit der Trennscheibe 9 verbundene zweite Riemenscheibe 16 geschlungen ist. Die erste Riemenscheibe 14 ist um eine Achse 15 drehbar gelagert. Die Achse 15 kann insbesondere mit der Achse der Abtriebswelle des Antriebsmotors 3 zusammenfallen. Der Riementrieb 49 kann auch ein mehrstufiger Riementrieb 49 sein.

Die Längsmittelachse 13 des Auslegers 8 verläuft insbesondere durch die Achse 15 und die Drehachse 17. Insbesondere verläuft die Längsmittelachse 13 senkrecht zur Achse 15 und senkrecht zur Drehachse 17.

Fig. 2 zeigt die Schutzhaube 11 in einer Position, in der ein vergleichsweise großer Abschnitt des Umfangs 10 der Trennscheibe 9, der in der Darstellung oberhalb der Längsmittelachse 13 verläuft, nicht von der Schutzhaube 11 abgedeckt ist. Die Linie 47 schließt mit der Längsmittelachse 13 einen Öffnungswinkel β ein, der deutlich größer als der Öffnungswinkel β bei der in Fig. 1 dargestellten ersten Endlage 37 der Schutzhaube 11 ist. Bei der Darstellung in Fig. 2 beträgt der Öffnungswinkel β näherungsweise 90°. Die Schutzhaube 11 befindet sich in einer zweiten Endlage 38. In der zweiten Endlage 38 ist die Schutzhaube 11 maximal geöffnet.

Wie Fig. 2 zeigt, liegt in der zweiten Endlage 38 der Schutzhaube 11 der Magnet 27 nicht zwischen Ausleger 8 und Trennscheibe 9, sondern außerhalb des vom Ausleger 8 abgedeckten Bereichs. Das Sensormodul 26 ist am Ausleger 8 zwischen einer Riemenspannvorrichtung 40 und der zweiten Riemenscheibe 16 angeordnet. Der Magnet 27 erstreckt sich über einen Erstreckungswinkel α, der insbesondere mindestens 35° um die Drehachse 17 beträgt.

Um die Schutzhaube 11 aus der in Fig. 1 dargestellten Position in die in Fig. 2 dargestellte Position zu verschwenken, muss der Bediener die Schutzhaube 11 in einer Öffnungsrichtung 31 bewegen. Die Öffnungsrichtung 31 verläuft entgegengerichtet zur Drehrichtung 50 der Trennscheibe 9 im Betrieb.

Wie Fig. 3 zeigt, kann die Schutzhaube 11 zur Verringerung des Öffnungswinkels β in einer entgegengerichteten Schließrichtung 32 vom Bediener verstellt werden. Die Schließrichtung 32 verläuft in Richtung der Drehrichtung 50 der Trennscheibe 9.

Fig. 3 zeigt die Schutzhaube 11 in einer ersten Position 44. In der ersten Position 44 schließt die Linie 47 mit der Längsmittelachse 13 einen ersten Öffnungswinkel β₁ ein. In der ersten Position 44 ist der Abschnitt des Umfangs 10 der Trennscheibe 9, der auf der gleichen Seite der Längsmittelachse 13 liegt wie die Handgriffe 5 und 12 und nicht von der Schutzhaube 11 zur Drehachse 17 radial nach außen abgedeckt ist, so groß wie der erste Öffnungswinkel β₁.

Eine zweite Position 45 der Schutzhaube 11, in der die Schutzhaube 11 etwas weiter in Schließrichtung 32 verstellt wurde, ist in Fig. 3 schematisch durch eine gestrichelte Linie angedeutet. In der zweiten Position 45 schließt die Linie 47 mit der Längsmittelachse 13 einen zweiten Öffnungswinkel β₂ ein. In der zweiten Position 45 ist der Abschnitt des Umfangs 10 der Trennscheibe 9, der auf der gleichen Seite der Längsmittelachse 13 liegt wie die Handgriffe 5 und 12 und nicht von der Schutzhaube 11 zur Drehachse 17 radial nach außen abgedeckt ist, so groß wie der zweiten Öffnungswinkel β₂.

Um die Schutzhaube 11 zwischen den Positionen 44 und 45 zu verstellen, muss die Schutzhaube 11 um einen Winkel γ verstellt werden. Der Winkel γ beträgt insbesondere mindestens 1°, insbesondere mindestens 2°.

Bei einer Verstellung der Schutzhaube 11 in Öffnungsrichtung 31 aus der ersten Endlage 37 in die zweite Endlage 38 wird zuerst die zweite Position 45 und dann die erste Position 44 erreicht. Bei einer Verstellung der Schutzhaube 11 in Schließrichtung 32 aus der zweiten Endlage 38 in die erste Endlage 37 wird zuerst die erste Position 44 und dann die zweite Position 45 erreicht.

Fig. 4 zeigt einen Schnitt durch Ausleger 8 und Schutzhaube 11 im Bereich der Erfassungseinrichtung 19. Die Erfassungseinrichtung 19 umfasst den Magnet 27, der in einer Vertiefung der Schutzhaube 11 fixiert ist. Der Magnet 27 kann beispielsweise eingegossen, eingeklebt oder an der Schutzhaube durch Klemmen fixiert sein. Auch andere Möglichkeiten der Fixierung können vorgesehen sein. In Fig. 4 sind schematisch Nordpol N und Südpol S des Magnets 27 eingezeichnet. Wie Fig. 4 zeigt, schneidet eine gedachte Ebene 35, die parallel zur Trennscheibe 9 und senkrecht zur Drehachse 17 der Trennscheibe 9 liegt, Nordpol N und Südpol S des Magnets 27. Die Ebene 35 schneidet die Stirnseiten des Magnets 27, an denen die Feldlinien aus dem Magnet 27 austreten.

Das Sensormodul 26 umfasst eine Platine 29, auf der als Sensor ein Hallsensor 36 angeordnet ist. Der Hallsensor 36 erfasst Änderungen im Magnetfeld. Für eine kompakte und bauraumsparende Anordnung ist das Sensormodul 26 so angeordnet, dass die Platine 29 parallel zur Drehachse 17 und senkrecht zur Ebene 35 liegt. Es hat sich gezeigt, dass auch bei dieser Anordnung von Sensormodul 26 und Magnet 27 ausreichend gute Signale zur Erfassung der Position der Schutzhaube 11 erzeugt werden.

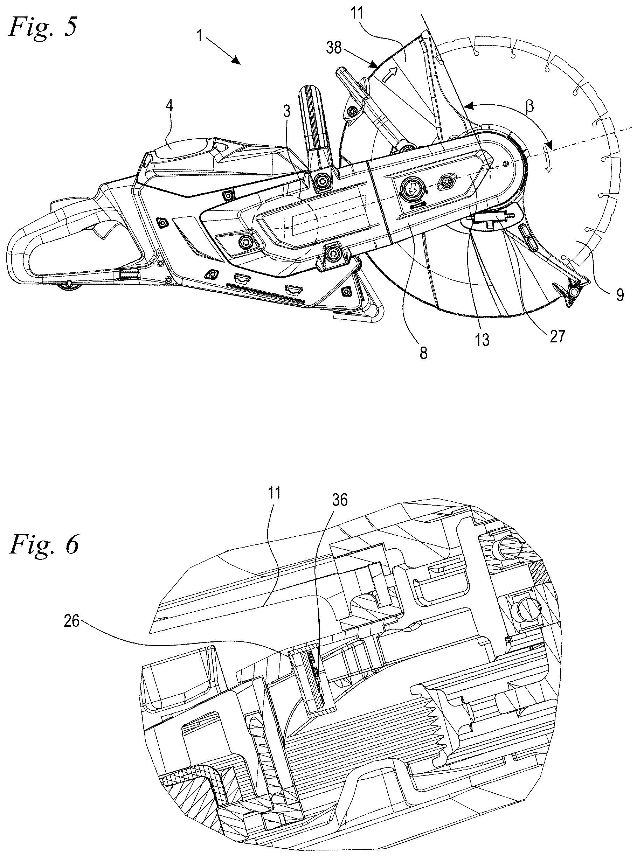

Fig. 5 zeigt das Arbeitsgerät 1 in einer Position der Schutzhaube 11, in der die Schutzhaube 11 vollständig geöffnet ist. Die in Fig. 5 dargestellte Position der Schutzhaube 11 ist die zweite Endlage 38. Wie Fig. 5 zeigt, befindet sich der Magnet 27 vollständig außerhalb des vom Ausleger 8 abgedeckten Bereichs. Der Magnet 27 befindet sich nicht in einem Bereich, in dem das Magnetfeld des Magnets 27 vom Hallsensor 36 des Sensormoduls 26 noch erfassbar ist.

In Fig. 6, die einen Schnitt durch den Ausleger 8 in der in Fig. 5 dargestellten zweiten Endlage 38 der Schutzhaube 11 zeigt, ist sichtbar, dass im Bereich des Sensormoduls 26 kein Magnet 27 angeordnet ist. Dadurch liefert das Sensormodul 26 bei der in den Figuren 3 und 4 dargestellten ersten Position 44 und bei der in den Figuren 5 und 6 dargestellten zweiten Endlage 38 der Schutzhaube 11 unterschiedliche Messwerte.

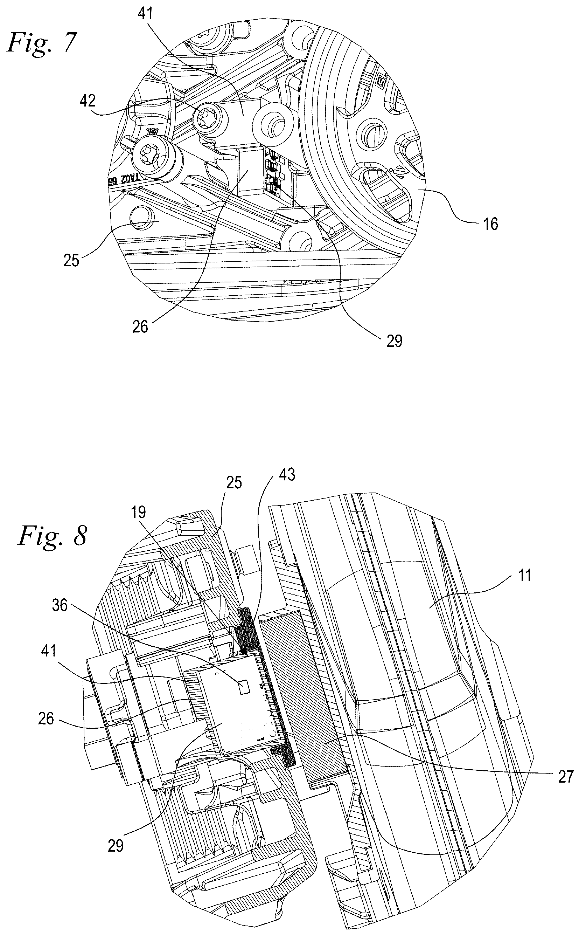

Die Anordnung und Gestaltung des Sensormoduls 26 ist auch in den Fig. 7 und 8 dargestellt. Das Sensormodul 26 umfasst ein Gehäuseteil 41, in dem die Platine 29 gehalten, beispielsweise eingegossen ist. Das Gehäuseteil 41 kann beispielsweise über eine Schraube 42 am Grundkörper 25 des Auslegers 8 fixiert sein. Im Bereich des Sensormoduls 26 weist der Grundkörper 25 an der der Schutzhaube 11 zugewandten Seite eine Abdeckung 43 aus nichtmetallischem Material auf, um den Einfluss des metallischen Auslegers 8 auf den magnetischen Fluss des Magnets 27 zu verringern.

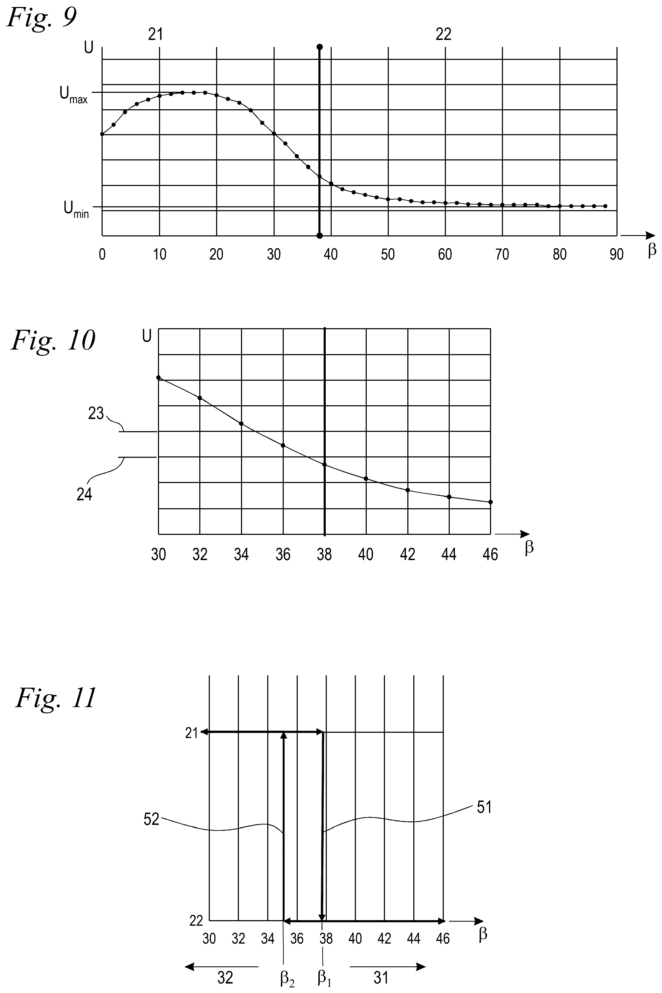

Die Fig. 9 und 10 zeigen den Verlauf des Messwerts U, im Ausführungsbeispiel der Spannung, die die Erfassungseinrichtung 19 liefert, in Abhängigkeit des Öffnungswinkels β. Wie Fig. 9 zeigt, verringert sich der Messwert U zwischen einem Öffnungswinkel β von etwa 20° bis zu einem Öffnungswinkel β von etwa 50° beim Vergrößern des Öffnungswinkels β, also bei einer Verstellung der Schutzhaube 11 in Öffnungsrichtung 11, deutlich. Im Bereich zwischen einem Öffnungswinkel β von etwa 10° bis 20° wird ein maximaler Messwert Uₘₐₓ erreicht. Ab einem Öffnungswinkel β von etwa 60° bleibt der Messwert U weitgehend konstant bei einem minimalen Messwert Uₘᵢₙ.

Im Bereich des maximalen Messwerts Uₘₐₓ befindet sich der Magnet 27 vollständig im Bereich des Hallsensors 36. Dies entspricht der in den Fig. 4 und 8 dargestellten Relativposition von Sensormodul 26 und Magnet 27.

Ab einem Öffnungswinkel β von etwa 50° bis 60° befindet sich der Magnet 27 vollständig außerhalb des Bereichs, der vom Hallsensor 36 erfasst werden kann. Dies entspricht der in den Fig. 5 und 6 dargestellten Relativposition von Sensormodul 26 und Magnet 27.

Für die Umschaltung vom ersten Betriebsmodus 21 in den zweiten Betriebsmodus 22 ist ein erster Schwellwert 23 vorgesehen, der in Fig. 10 schematisch eingezeichnet ist. Für die Umschaltung aus dem zweiten Betriebsmodus 22 in den ersten Betriebsmodus 21 ist ein zweiter Schwellwert 24 des Messwerts U vorgesehen, der ebenfalls schematisch in Fig. 10 eingezeichnet ist. Der erste Schwellwert 23 ist in etwa der ersten Position 44 zugeordnet. Der zweite Schwellwert 24 ist in etwa der zweiten Position 45 zugeordnet. Je nach Verschmutzungsgrad können sich die exakten Positionen 44, 45 der Schutzhaube 11, die den Schwellwerten 23 und 24 zugeordnet sind, über die Lebensdauer des Arbeitsgeräts 1 ändern. Die Schwellwerte 23 und 24 sind insbesondere so gewählt, dass unabhängig von Verschleiß, Verschmutzungsgrad, Vibrationen und dergleichen zwischen den Positionen 44 und 45 ein Abstand von mindestens 1° erhalten bleibt.

Die Differenz der Schwellwerte 23 und 24 entspricht insbesondere mindestens 5 %, insbesondere mindestens 10 % der Differenz von minimalem Messwert Uₘᵢₙ und maximalem Messwert Uₘₐₓ.

Die von der Erfassungseinrichtung 19 erfasste Position der Schutzhaube 11 wird wie in Fig. 11 schematisch dargestellt genutzt, um zwischen zwei Betriebsmodi 21 und 22 umzuschalten. Im ersten Betriebsmodus 21 befindet sich der Magnet 27 im Bereich des Sensormoduls 26. Dies entspricht der in den Fig. 4 und 8 dargestellten Position von Magnet 27 und Sensormodul 26. Im ersten Betriebsmodus 21 ist der Öffnungswinkel β kleiner als der erste Öffnungswinkel β₁. Wenn die Schutzhaube 11 in Öffnungsrichtung 31 bewegt wird und die erste Position 44, also den ersten Öffnungswinkel β₁, erreicht, schaltet die Steuerung 20 vom ersten Betriebsmodus 21 in den zweiten Betriebsmodus 22 um. Dies ist in Fig. 11 durch den Pfeil 51 dargestellt.

Wird die Schutzhaube aus einer Position, die zwischen der ersten Position 44 und der zweiten Endlage 38 liegt, in Schließrichtung 32 bewegt, so erfolgt die Umschaltung nicht beim Erreichen der ersten Position 44, sondern erst dann, wenn die erste Position 44 überstrichen und eine zweite Position 45 erreicht wird. Dies ist in Fig. 11 durch den Pfeil 52 dargestellt. Die zweite Position 45 entspricht einem zweiten Öffnungswinkel β₂, der kleiner als der Öffnungswinkel β₁ ist. Die Differenz zwischen dem ersten Öffnungswinkel β₁ und dem zweiten Öffnungswinkel β₂ beträgt insbesondere mindestens 1°, insbesondere mindestens 2°.

Die Steuereinrichtung 20 ist dazu ausgebildet, das Arbeitsgerät 1 in einem ersten Betriebsmodus 21 und einem zweiten Betriebsmodus 22 zu betreiben. Die beiden Betriebsmodi 21 und 22 unterscheiden sich in der Ansteuerung mindestens einer Komponente des Arbeitsgeräts 1. Beispielsweise kann eine Komponente des Arbeitsgeräts 1 in einem der Betriebsmodi 21 bzw. 22 aktiv und in dem anderen der Betriebsmodi 22 bzw. 21 nicht aktiv sein.

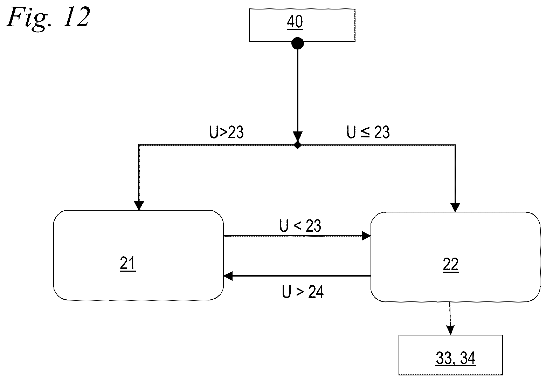

Zur Umschaltung zwischen den Betriebsmodi 21 und 22 vergleicht die Steuereinrichtung 20 (Fig. 1) den von der Erfassungseinrichtung 19 gelieferten Messwert U mit einem ersten Schwellwert 23 und einem zweiten Schwellwert 24 (Fig. 12). Wie Fig. 9 zeigt, entspricht im Ausführungsbeispiel ein großer Öffnungswinkel β einem kleinen Messwert U und ein kleiner Öffnungswinkel β entspricht einem großen Messwert U.

Das Umschalten zwischen den Betriebsmodi 21 und 22 erfolgt, wenn die Schutzhaube 11 in Öffnungsrichtung 31 bewegt wird und die erste Position 44 überschritten wird bzw. wenn die Schutzhaube 11 in Schließrichtung 32 bewegt wird und die zweite Position 45 überschritten wird.

Die erste Position 44 entspricht dem ersten Öffnungswinkel β₁. Das Überschreiten der ersten Position 44 bei einer Bewegung in Öffnungsrichtung 31 entspricht einem Öffnen der Schutzhaube 11 über den ersten Öffnungswinkel β₁ hinaus. Die zweite Position 45 entspricht dem zweiten Öffnungswinkel β₂. Das Überschreiten der zweiten Position 45 bei einer Bewegung in Schließrichtung 32 entspricht einem Schließen der Schutzhaube 11 über den zweiten Öffnungswinkel β₂ hinaus.

Fig. 12 zeigt schematisch ein Verfahren zum Betrieb des Arbeitsgeräts 1. Der Verfahrensschritt 46 entspricht dem Starten des Arbeitsgeräts 1. Zunächst wird geprüft, ob der Messwert U größer ist als der erste Schwellwert 23. Alternativ kann bei der Inbetriebnahme auch eine Auswahl des ersten Betriebsmodus 21 anhand des zweiten Schwellwerts 24 oder anhand eines anderen Werts erfolgen.

Liegt der Messwert U über dem ersten Schwellwert 23, so steuert die Steuereinrichtung 20 das Arbeitsgerät 1 zunächst gemäß dem ersten Betriebsmodus 21 an. Ist der Messwert U kleiner oder gleich dem ersten Schwellwert 23, so steuert die Steuereinrichtung 20 das Arbeitsgerät 1 zunächst gemäß dem zweiten Betriebsmodus 22 an.

Der Messwert U wird insbesondere laufend überwacht.

Unterschreitet der Messwert U den ersten Schwellwert 23, weil der Bediener die Schutzhaube 11 in Schließrichtung 32 bis zur ersten Position 44 zurückstellt, erfolgt zunächst keine Umschaltung in den ersten Betriebsmodus 21. Erst dann, wenn auch der zweite Schwellwert 24, der der zweiten Position 45 zugeordnet ist, erreicht wird, schaltet die Steuereinrichtung 20 zurück in den ersten Betriebsmodus 21.

Im zweiten Betriebsmodus 22 ist insbesondere vorgesehen, dass eine Drehzahlbegrenzungseinrichtung 33 des Arbeitsgeräts 1 aktiv ist und/oder dass eine Bremseinrichtung 34 des Arbeitsgeräts 1 aktiv ist. Die Drehzahlbegrenzungseinrichtung 33 stellt sicher, dass die Drehzahl des Antriebsmotors 3 nicht über einen voreingestellten Wert ansteigen kann. Insbesondere beträgt die maximale Drehzahl des Arbeitsgeräts 1 im zweiten Betriebsmodus 22 60 % bis 70 % der maximalen Drehzahl des Arbeitsgeräts 1 im ersten Betriebsmodus 21.

Die Bremseinrichtung 34 bremst die Trennscheibe 9. Insbesondere erfolgt die Bremsung der Trennscheibe 9 über ein Bremsen des Antriebsmotors 3, also mittels Motorbremse. Alternativ oder wenn der Antriebsmotor 3 ein Verbrennungsmotor ist, kann eine zusätzliche oder ausschließlich eine mechanische Bremseinrichtung, beispielsweise eine Bandbremse, vorgesehen sein.

Im ersten Betriebsmodus 21 sind die Drehzahlbegrenzungseinrichtung 33 und die Bremseinrichtung 34 insbesondere nicht aktiv.

## Patentansprüche

1. Arbeitsgerät mit einem Antriebsmotor (3) und mit einer von dem Antriebsmotor (3) angetriebenen Trennscheibe (9), mit einer Schutzhaube (11), die die Trennscheibe (9) über einen Abschnitt ihres Umfangs (10) abdeckt und die vom Bediener in einer Öffnungsrichtung (31) und einer entgegengerichteten Schließrichtung (32) verstellbar ist, mit einer Erfassungseinrichtung (19) zur Erfassung der Position der Schutzhaube (11), und mit einer Steuereinrichtung (20), wobei die Steuereinrichtung (20) dazu ausgebildet ist, das Arbeitsgerät (1) in einem ersten Betriebsmodus (21) und in einem zweiten Betriebsmodus (22) zu betreiben und in Abhängigkeit der von der Erfassungseinrichtung (19) erfassten Position der Schutzhaube (11) bei einer Verstellung in Öffnungsrichtung (31) vom ersten Betriebsmodus (21) in den zweiten Betriebsmodus (22) umzuschalten und bei einer Verstellung der Schutzhaube (11) in Schließrichtung (32) vom zweiten Betriebsmodus (22) in den ersten Betriebsmodus (21) umzuschalten, wobei die Umschaltung vom ersten Betriebsmodus (21) in den zweiten Betriebsmodus (22) bei einer ersten Position (44) der Schutzhaube (11) erfolgt,
**dadurch gekennzeichnet, dass** die Umschaltung vom zweiten Betriebsmodus (22) in den ersten Betriebsmodus (21) bei einer zweiten Position (45) der Schutzhaube (11) erfolgt, wobei die zweite Position (45) der Schutzhaube (11) bei einer Verstellung der Schutzhaube (11) in Schließrichtung (32) nach der ersten Position (44) erreicht wird.

2. Arbeitsgerät nach Anspruch 1,
**dadurch gekennzeichnet, dass** die erste Position (44) und die zweite Position (45) um einen Winkel (γ) von mindestens 1°, insbesondere von mindestens 2° um die Drehachse der Trennscheibe (9) zueinander beabstandet sind.

3. Arbeitsgerät nach Anspruch 1 oder 2,
**dadurch gekennzeichnet, dass** die Steuereinrichtung (20) dazu ausgebildet ist, im zweiten Betriebsmodus (22) eine Drehzahlbegrenzungseinrichtung (33) zu aktivieren.

4. Arbeitsgerät nach einem der Ansprüche 1 bis 3,
**dadurch gekennzeichnet, dass** die Steuereinrichtung (20) dazu ausgebildet ist, im zweiten Betriebsmodus (22) eine Bremseinrichtung des Arbeitsgeräts (1) zu aktivieren.

5. Arbeitsgerät nach einem der Ansprüche 1 bis 4,
**dadurch gekennzeichnet, dass** die Erfassungseinrichtung (19) mindestens einen Magneten (27) und mindestens einen Sensor, insbesondere einen Hallsensor (36), zur Erfassung der Magnetfeldstärke des mindestens einen Magneten (27) aufweist.

6. Arbeitsgerät nach Anspruch 5,
**dadurch gekennzeichnet, dass** das Arbeitsgerät (1) ein Trennschleifer mit einem Ausleger (8) ist, an dem die Trennscheibe (9) drehbar gelagert ist, dass der mindestens eine Sensor an dem Ausleger (8) angeordnet ist und dass der mindestens eine Magnet (27) an der Schutzhaube (11) angeordnet ist.

7. Arbeitsgerät nach Anspruch 5 oder 6,
**dadurch gekennzeichnet, dass** der mindestens eine Magnet (27) so orientiert ist, dass eine gedachte Ebene (35), die senkrecht zur Drehachse (17) der Trennscheibe (9) verläuft, den Magneten (27) durch Nordpol (N) und Südpol (S) schneidet.

8. Arbeitsgerät nach einem der Ansprüche 5 bis 7,
**dadurch gekennzeichnet, dass** der mindestens eine Sensor auf einer Platine (29) fixiert ist, die um weniger als 45° zur Drehachse (17) der Trennscheibe (9) geneigt ist, insbesondere parallel zur Drehachse (17) der Trennscheibe (9) verläuft.

9. Arbeitsgerät nach einem der Ansprüche 1 bis 8,
**dadurch gekennzeichnet, dass** das Arbeitsgerät (1) mindestens einen Handgriff (5, 12) aufweist, dass das Arbeitsgerät (1) ein Trennschleifer mit einem Ausleger (8) ist, an dem die Trennscheibe (9) drehbar gelagert ist, dass der Ausleger (8) eine Längsmittelachse (13) aufweist, die in Längsrichtung des Auslegers (8) verläuft und die Drehachse (17) der Trennscheibe (9) schneidet, wobei sich bei einer Verstellung der Schutzhaube (11) in Öffnungsrichtung (31) der nicht von der Schutzhaube (11) abgedeckte Abschnitt des Umfangs (10) der Trennscheibe (9) vergrößert, der bei Blickrichtung in Richtung der Drehachse (17) der Trennscheibe (9) auf der gleichen Seite der Längsmittelachse (13) angeordnet ist wie der mindestens eine Handgriff (5, 12).

10. Verfahren zum Betrieb eines Arbeitsgeräts, mit einem Antriebsmotor (3) und mit einer von dem Antriebsmotor (3) angetriebenen Trennscheibe (9), mit einer Schutzhaube (11), die die Trennscheibe (9) über einen Abschnitt ihres Umfangs (10) abdeckt und die vom Bediener in einer Öffnungsrichtung (31) und einer entgegengerichteten Schließrichtung (32) verstellbar ist, mit einer Erfassungseinrichtung (19) zur Erfassung der Position der Schutzhaube (11), und mit einer Steuereinrichtung (20), wobei die Steuereinrichtung (20) den Arbeitsgerät (1) in einem ersten Betriebsmodus (21) und in einem zweiten Betriebsmodus (22) betreibt und in Abhängigkeit der von der Erfassungseinrichtung (19) gemessenen Position der Schutzhaube (11) bei einer Verstellung in Öffnungsrichtung (31) vom ersten Betriebsmodus (21) in den zweiten Betriebsmodus (22) umschaltet und bei einer Verstellung der Schutzhaube (11) in Schließrichtung (32) vom zweiten Betriebsmodus (22) in den ersten Betriebsmodus (21) umschaltet, wobei die Steuereinrichtung (20) bei einer ersten Position (44) der Schutzhaube (11) vom ersten Betriebsmodus (21) in den zweiten Betriebsmodus (22) umschaltet, **dadurch gekennzeichnet, dass** die Steuereinrichtung (20) bei einer zweiten Position (45) der Schutzhaube (11) vom zweiten Betriebsmodus (22) in den ersten Betriebsmodus (21) umschaltet, wobei die zweite Position (45) der Schutzhaube (11) bei einer Verstellung in Schließrichtung (32) nach der ersten Position (44) erreicht wird.
